# EUROPÄISCHE PATENTANMELDUNG

(11) **EP 1 081 168 A2**
(43) Veröffentlichungstag der Anmeldung: **07.03.2001**
(21) Anmeldenummer: 00117296.4
(22) Anmeldetag: 18.08.2000
(51) Int. Cl.: C08F 236/10, C08F 4/48

(54) **Verfahren zur Herstellung eines Copolymerisats auf der Basis von vinylaromatischen Verbindungen und konjugierten Dienen sowie dessen Verwendung zur Herstellung von Vulkanisaten mit einem hervorragenden Dämpfungsverhalten**

(30) Priorität: 31.08.1999 DE 19941314
(71) Anmelder: BAYER AG, 51368 Leverkusen (DE)
(72) Erfinder: Giebeler, Ellen, Dr., 50735 Köln (DE); Wrana, Claus, Dr., 51061 Köln (DE)

(57) **Zusammenfassung**

Nach dem erfindungsgemäßen Verfahren werden Copolymerisate auf Basis von vinylaromatischen Verbindungen und konjugierten Dienen mit einem mittleren Molekulargewicht (Mn) von 50 000 bis 600 000 g/mol, einem Gehalt an vinylaromatischer Verbindung von 5 bis 50 Gew.-% sowie einem Gehalt an konjugiertem Dien von 50 bis 95 Gew.-%, in dem man eine vinylaromatische Verbindung mit einem konjugierten Dien in Gegenwart eines lithiummetallhaltigen Initiators umsetzt, wobei man die Polymerisation so steuert, daß die Dämpfung im Glasprozeß einen Frequenzbereich umfaßt, welcher dadurch gekennzeichnet ist, daß die Halbwertsbreite des Maximums des Verlustfaktors tan δ größer 3 Frequenzdekaden beträgt.

## Beschreibung

Gegenstand der vorliegenden Erfindung ist ein Verfahren zur Herstellung eines Copolymerisats auf Basis von vinylaromatischen Verbindungen und konjugierten Dienen sowie dessen Verwendung zur Herstellung von Vulkanisaten mit einem hervorragenden Dämpfungsverhalten, gekoppelt mit besonders gutem Naßrutschverhalten und verbunden mit einer guten Verarbeitbarkeit der Copolymerisate bei der Herstellung von entsprechenden Vulkanisaten.

Es ist bekannt, das Naßrutschverhalten (Naß-Rutschsicherheit) von Styrol-Butadien-Copolymerisaten zu verbessern, indem man die Verteilungsbreite des Vinylgehalts oder des Styrolgehalts erhöht. Zu Erwähnen sind in diesem Zusammenhang insbesondere die DE 31 15 878, EP 0 530 795 und EP 553 689. Nachteilig bei den in den genannten Patentveröffentlichungen beschriebenen Styrol-Butadien-Copolymerisaten ist insbesondere deren komplizierte Herstellungsweise, bei der darauf zu achten ist, daß zum einen ein bestimmter Temperaturgradient während der Reaktion eingehalten wird oder zum anderen, daß die Menge des Modifiers oder der Monomeren während der Reaktion ständig ansteigt, was eine besondere Kontrolle bei der Polymerisation erforderlich macht.

Aufgabe der vorliegenden Erfindung ist es nun, ein vereinfachtes Verfahren zur Herstellung von Copolymerisaten auf Basis von vinylaromatischen Verbindungen und konjugierten Dienen zur Verfügung zu stellen, das ohne eine besonders aufwändige Kontrolle der einzusetzenden Monomeren, der Temperatur sowie der Modifiermenge auskommt. Darüber hinaus sollen die Copolymerisate bzw. deren Vulkanisate ein verbessertes Naßrutschverhalten und ein hervorragendes Dämpfungsverhalten aufweisen sowie ein gutes Verarbeitungsverhalten bei der Herstellung entsprechender Vulkanisate aus den Copolymerisaten.

Gegenstand der vorliegenden Erfindung ist daher ein Verfahren zur Herstellung von Copolymerisaten auf Basis von vinylaromatischen Verbindungen und konjugierten Dienen mit einem mittleren Molekulargewicht (Mn) von 50 000 bis 600 000 g/mol, einem Gehalt an vinylaromatischer Verbindung von 5 bis 50 Gew.-% sowie einem Gehalt an konjugiertem Dien von 50 bis 95 Gew.-%, das dadurch gekennzeichnet ist, daß man eine vinylaromatische Verbindung mit einem konjugierten Dien in Gegenwart eines lithiummetallhaltigen Initiators umsetzt, wobei man die Polymerisation so steuert, daß die Dämpfung im Glasprozeß einen Frequenzbereich umfaßt, welcher dadurch gekennzeichnet ist, daß die Halbwertsbreite des Maximums des Verlustfaktors tan δ größer 3, insbesondere 3,5 bis 6, ganz besonders bevorzugt 4 bis 6 Frequenzdekaden beträgt.

Durch den sich bei dem erfindungsgemäßen Verfahren kontinuierlich ändernden Gehalt an vinylaromatischer Verbindung in der Polymerkette ändert sich auch das Dämpfungsverhalten im Glasübergangsbereich des Copolymerisats. Das Dämpfungsverhalten im Glasübergangsbereich ist dann durch die Messung der Halbwertsbreite des Verlustfaktors tan δ charakterisierbar.

Zur Bestimmung der Halbwertsbreite des Verlustfaktors tan δ werden Frequenzspektren des komplexen Schubmoduls erstellt (siehe hierzu die Dissertation von C. Wrana, Universität Ulm, 1996, S. 2-23). Durch die Anwendung des Frequenz-Temperatur Superpositionsprinzips kann der apparative Frequenzbereich der Schubmodulspektren des verwendeten Meßgerätes auf den relevanten Frequenzbereich erweitert werden. Vom Maximum des Verlustfaktors tan δ, das bei Elastomeren durch den Glasrelaxationsprozeß verursacht wird und in einem Frequenzbereich von 1 Hz bis 1 GHz bei einer Referenztemperatur von 20°C aufzufinden ist, wird die Halbwertsbreite durch die Differenzbildung der beiden Verlustfaktoren *tan δ bestimmt, die bei größeren und kleineren Frequenzen als das Maximum liegen und genau die Hälfte des Maximalwertes betragen.

Bevorzugt werden nach dem erfindungsgemäßen Verfahren Copolymerisate auf Basis von vinylaromatischen Verbindungen und konjugierten Dienen hergestellt, die ein mittleres Molekulargewicht (Mn) im Bereich von 100 000 bis 500 000 g/mol (bestimmt durch Gelpermeationschromatographie mit Polystyrol als Standard), einen Gehalt an aromatischer Vinylverbindung von 10 bis 45 Gew.-% und einen Gehalt an konjugierten Dienen von 55 bis 90 Gew.-% besitzen.

Als konjugierte Diene können in das erfindungsgemäße Verfahren 1,3-Butadien, Isopren, 1,3-Pentadien, 2,3-Dimethyl-1,3-butadien, 1-Phenyl-1,3-butadien, 1,3-Hexadien sowie 1,3-Heptadien eingesetzt werden. Bevorzugt werden 1,3-Butadien und Isopren eingesetzt.

Als vinylaromatische Verbindungen können in das erfindungsgemäße Verfahren neben Styrol, p-Methylstyrol, α-Methylstyrol, 3,5-Dimethylstyrol, Vinylnaphthalin, p-tert.-Butylstyrol, Divinylbenzol und Diphenylethylen eingesetzt werden, insbesondere Styrol.

Die vinylaromatischen Verbindungen als auch die konjugierten Diene können einzeln oder im Gemisch untereinander als Monomere für die Herstellung der Copolymerisate eingesetzt werden.

Für das erfindungsgemäße Verfahren kommen als lithiummetallhaltige Initiatoren die für die anionische Polymerisation bekannten lithiummetallhaltigen Initiatoren in Betracht, beispielsweise sind zu nennen n-Butyllithium, sec.-Butyllithium, tert.-Butyllithium, n-Propyllithium, Isopropyllithium, Ethyllithium, Cyclohexyllithium, Phenyllithium sowie 2-Naphthyllithium, insbesondere n-Butyllithium.

Die lithiummetallhaltigen Initiatoren werden üblicherweise in Mengen von 0,1 bis 15 mmol, bevorzugt 0,2 bis 10 mmol, bezogen auf 100 g Polymer, in das erfindungsgemäße Verfahren eingesetzt.

Für das erfindungsgemäße Verfahren kann es von Vorteil sein, wenn neben den lithiummetallhaltigen Initiatoren noch Alkalimetall-Verbindungen eingesetzt werden.

Die Alkalimetall-Verbindungen können ausgewählt sein aus Alkalimetall-Verbindungen gemäß der folgenden allgemeinen Formeln:

R¹M, R²OM, R³COOM und R⁴R⁵NM,

worin
- R¹, R², R³, R⁴ und R⁵: eine Alkylgruppe, eine Cycloalkylgruppe, eine Alkenylgruppe, eine Arylgruppe oder eine teilweise substituierte Gruppe davon, und
- M: gleich Na, K, Rb oder Cs bedeuten.

Als Alkalimetallverbindung der Formel R¹M seien Verbindungen wie Methylnatrium, Ethylkalium, n-Propylrubidium, Ethylcäsium, t-Butylnatrium, t-Amylkalium, n-Hexylrubidium, 4-Methylcyclohexylnatrium, 3-Hexenylkalium, 2,5-Decadienylrubidium, 4,6-Di-n-butyldecylnatrium, Phenylkalium, Benzylnatrium und 4-Tolylkalium, erwähnt.

Als Alkalimetallverbindung der Formel R²OM können Alkalimetallsalze ein- und mehrwertiger Alkohole und Phenole, wie Natrium-, Kalium-, Rubidium- oder Cäsiumsalze des Methylalkohols, Ethylalkohols, n-Propylalkohols, Isopropylalkohols, t-Butylalkohols, t-Amylalkohols, n-Hexylalkohols, Cyclohexylalkohols, 2-Butenylalkohols, 4-Methylcyclohexenylalkohols, 3-Cyclopentenylalkohols, 3-Hexenylalkohols, 2,5-Decadienylalkohols, Allylalkohols, 1,3-Dihydrohexan, 1,5,9-Trihydroxytridecan, Benzylalkohols, Phenol, Katechol, Resorcinol, Hydrochinon, Pyrogallol, 1-Naphthol, 2-Naphthol, 2,6-Di-t-butyl-4-methylphenol, 2,4,5,6-Tri-t-butylphenol, n-Nonylphenol und 1,12-Dodecandiol, eingesetzt werden.

Als Alkalimetallverbindung der Formel R³COOM können Alkalimetallsalze ein-oder mehrwertiger Carbonsäuren, wie Natrium-, Kalium-, Rubidium- oder Cäsiumsalze der Laurinsäure, Myristinsäure, Palmitinsäure, Stearinsäure, Arachinsäure, Linolsäure, Linolensäure, Phenylessigsäure, Benzoesäure, Sebacinsäure, Phthalsäure und 1,8,16-Hexadecantoloylcarbonsäure, verwendet werden.

Als Alkalimetallverbindung der Formel R⁴R⁵NM können Alkalimetallsalze sekundärer Amine, wie Natrium-, Kalium-, Rubidium- oder Cäsiumsalze des Dimethylamins, Di-n-butylamins, Methyl-n-hexylamins, Di(3-hexenyl)amins, Diphenylamins und Dibenzylamins, verwendet werden.

Bevorzugt werden in das erfindungsgemäße Verfahren alkalimetallhaltige Alkoholate eingesetzt wie Natrium-, Kalium-, Rubidium- oder Cäsiumsalze des Methylalkohols, Ethylalkohols, n-Propylalkohols, Isopropylalkohols, tert-Butylalkohols, tert.-Amylalkohols, n-Hexylalkohols, Cyclohexylalkohols, Butylalkohols, Phenols und 1-Naphthols. Ganz besonders bevorzugt wird das Kaliumsalz des tert.-Amylalkohols eingesetzt.

Die Alkalimetall-Verbindungen werden üblicherweise in einer solchen Menge in das erfindungsgemäße Verfahren eingesetzt, daß das molare Verhältnis von lithiummetallhaltigem Initiator zu Alkalimetall-Verbindungen 1:0,005 bis 1:0,25.

Selbstverständlich ist es auch möglich das erfindungsgemäße Verfahren in Gegenwart von sogenannten Modifiern, wie Ethern und/oder aminischen Verbindungen, wie tertiäre Amine, durchzuführen, die in der Lage sind, den Vinylgehalt in der Polymerkette zu steuern. Als Etherverbindungen bzw. aminische Verbindungen sind insbesondere zu nennen: Triethylamin, Pyridin, Tetramethylethylendiamin (TMEDA), Tetrahydrofuran (THF), Diethylether, Diphenylether, Anisol, Ethylenglykoldimethylether, Ethylenglykoldiethylether, Ethylenglykolethyl-tert.-butylether, 2,2-Bis-(2-oxolanyl)propan, oligomere Oxolanylalkane. Die genannten Modifier können sowohl einzeln als auch im Gemisch untereinander eingesetzt werden.

Die optimale Menge an einzusetzenden Modifiern kann leicht durch entsprechende Vorversuche bestimmt werden und richtet sich nach dem gewünschten Gehalt an Vinyl-Gruppierungen in der Polymerkette. Üblich sind Mengen von ca. 0,005 bis 400 mmol pro 100 g eingesetzter Monomere.

Das erfindungsgemäße Verfahren kann bei Temperaturen im Bereich von ca. 40 bis 160°C, bevorzugt 50 bis 130°C durchgeführt werden. Das erfindungsgemäße Verfahren kann sowohl bei Unterdruck, Normaldruck als auch bei erhöhtem Druck durchgeführt werden, bevorzugt bei erhöhtem Druck, beispielsweise bei Drücken von 1 bis 10 bar.

Das erfindungsgemäße Verfahren kann sowohl kontinuierlich als auch diskontinuierlich durchgeführt werden.

Das erfindungsgemäße Verfahren wird in Gegenwart der üblichen inerten Lösungsmittel durchgeführt, die für die anionische Polymerisation bekannt sind. Dies sind insbesondere aromatische und/oder aliphatische Kohlenwasserstoffe mit 2 bis 12 Kohlenstoffatomen, wie Ethan, Propan, iso- und n-Butan, iso- und n-Pentan, iso- und n-Hexan, iso- und n-Heptan, iso- und n-Octan, Cyclobutan, Cyclopentan, Cyclohexan, Cycloheptan, Cyclooctan, besonders zu nennen sind n-Hexan und Cyclohexan.

Die Lösungsmittel können sowohl einzeln als auch im Gemisch untereinander eingesetzt werden, selbstverständlich auch in Form ihrer Isomerengemische.

Die jeweils günstige Menge an Lösungsmittel kann ebenfalls leicht durch entsprechende Vorversuche bestimmt werden.

Die erfindungsgemäß hergestellten Copolymerisate auf Basis von aromatischen Vinylverbindungen und konjugierten Dienen eignen sich zur Herstellung von Vulkanisaten, die ein hervorragendes Dämpfungsverhalten aufweisen gekoppelt mit einem überlegenen Naßrutschverhalten, weshalb die erfindungsgemäß hergestellten Copolymerisate sich insbesondere zur Herstellung von Reifen, bevorzugt Reifenlaufflächen eignen. Selbstverständlich können aus den erfindungsgemäßen Copolymerisaten andere vulkanisierte Formkörper hergestellt werden, bei denen die zuvor genannten physikalischen Eigenschaften von Bedeutung sind.

### Beispiele

Die Polymerisationen wurden unter Ausschluß von Luft und Feuchtigkeit unter Stickstoff durchgeführt.

Die Bestimmung des Gehaltes an Styrol im Polymeren sowie der Selektivität des Polybutadiens (1,4-cis-, 1,4-trans- und 1,2-Gehalt) erfolgt mittels IR-Spektroskopie, das Dämpfungsverhalten und die Bestimmung der Halbwertsbreite der Verlustfaktoren mittels frequenzabhängiger Messungen der komplexen Materialgrößen.

### Beispiel 1 bis 4

### Polymerisation

Die Polymerisation erfolgte in einem 2-Liter-Büchi-Glasautoklaven mit Rührer und Mantelheizung. Unter Stickstoff wurden die in Tabelle 1 angegebenen Mengen Styrol, 1,3-Butadien, Hexan (Isomerengemisch), Initiatorlösung (n-Butyllithium in n-Hexan), Alkalimetall-Alkoholat Kalium-tert.-amylat (KTA) und Modifier Diethoxyethan (DEE) zugegeben. Die Temperatur wurde auf 60°C eingestellt. Das Polymer wurde nach Erreichen vollständigen Umsatzes (ca. 2 h) durch Fällen der Polymerlösung in Ethanol/BHT (2,6-Di-tert.-butyl-4-methylphenol) isoliert und bis zur Massekonstanz im Vakuumtrockenschrank bei 60°C getrocknet. Die Ansatzgrößen, Reaktionsbedingungen und die Eigenschaften der erhalten Polymeren sind in Tabelle 1 angegeben.

**Tabelle 1**

| Beispiel 1 bis 4 | | | | |
|---|---|---|---|---|
| **Beispiel** | **1** | **2** | **3** | **4** |
| Polymerisation | | | | |
| BuLi in mmol | 1,13 | 1,13 | 1,13 | 1,13 |
| Hexan in g | 850 | 850 | 850 | 850 |
| Styrol in g | 37,5 | 37,5 | 37,5 | 37,5 |
| 1,3-Butadien in g | 112,5 | 112,5 | 112,5 | 112,5 |
| KTA in mmol | 0 | 0,023 | 0,057 | 0,283 |
| DEE in mmol | 1,75 | 1,75 | 1,75 | 1,75 |

| Polymer | | | | |
|---|---|---|---|---|
| Gehalt Styrol in Gew.-% | 23,1 | 23,8 | 23,7 | 23,9 |
| Gehalt Butadien in Gew.-% | 76,9 | 76,2 | 76,3 | 76,1 |
| cis in % | 12,3 | 12,0 | 12,4 | 16,0 |
| trans in % | 18,3 | 17,2 | 17,5 | 24,4 |
| 1,2 in % | 46,3 | 47,0 | 46,4 | 35,7 |
| HWB in log (f/Hz) | 4,4 | 3 | 3 | 6,3 |
| Frequenzlage in log (f/Hz) | 5,3 | 4,4 | 4,7 | -0,6/9,8 |

### Beispiel 5-8

### Polymerisation

Die Polymerisation erfolgte gemäß Beispiel 1 bis 4, wobei kein Ether eingesetzt wurde. Die Ansatzgrößen, Reaktionsbedingungen und die Eigenschaften der erhaltenen Polymere sind in Tabelle 2 angegeben.

**Tabelle 2**

| Beispiel 5 bis 8 | | | | |
|---|---|---|---|---|
| **Beispiel** | **5** | **6** | **7** | **8** |
| Polymerisation | | | | |
| BuLi in mmol | 1,25 | 1,25 | 1,25 | 1,25 |
| Hexan in g | 850 | 850 | 850 | 850 |
| Styrol in g | 37,5 | 37,5 | 37,5 | 37,5 |
| 1,3-Butadien in g | 112,5 | 112,5 | 112,5 | 112,5 |
| KTA in mmol | 0 | 0,063 | 0,125 | 0,25 |

| Polymer | | | | |
|---|---|---|---|---|
| Gehalt Styrol in Gew-% | 25,5 | 26,2 | 26,4 | 26,1 |
| Gehalt Butadien in Gew-% | 74,5 | 73,8 | 73,6 | 73,9 |
| cis in % | 30,0 | 28,7 | 27,4 | 25,6 |
| trans in % | 37,4 | 35,9 | 34,4 | 32,4 |
| 1,2 in % | 7,1 | 9,2 | 11,8 | 15,9 |
| HWB in log(f/Hz) | 4,4 | 4,3 | 3,7 | 5,0 |
| Frequenzlage in log(f/Hz) | 6,9 | 6,5 | 6,0 | 5,6 |

## Patentansprüche

1. Verfahren zur Herstellung von Copolymerisaten auf Basis von vinylaromatischen Verbindungen und konjugierten Dienen mit einem mittleren Molekulargewicht (Mn) von 50 000 bis 600 000 g/mol, einem Gehalt an vinylaromatischer Verbindung von 5 bis 50 Gew.-% sowie einem Gehalt an konjugiertem Dien von 50 bis 95 Gew.-%, dadurch gekennzeichnet, daß man eine vinylaromatische Verbindung mit einem konjugierten Dien in Gegenwart eines lithiummetallhaltigen Initiators umsetzt, wobei man die Polymerisation so steuert, daß die Dämpfung im Glasprozeß einen Frequenzbereich umfaßt, welcher dadurch gekennzeichnet ist, daß die Halbwertsbreite des Maximums des Verlustfaktors tan δ größer 3 Frequenzdekaden beträgt.

2. Verfahren nach Anspruch 1, dadurch gekennzeichnet, daß man die lithiumhaltigen Initiatoren in Mengen von 0,1 bis 15 mmol, bezogen auf 100 g Polymer, einsetzt.

3. Verfahren nach Anspruch 1, dadurch gekennzeichnet, daß die Dämpfung im Glasprozeß einen Frequenzbereich umfaßt, welcher dadurch gekennzeichnet ist, daß die Halbwertsbreite des Maximums des Verlustfaktors tan δ 3,5 bis 6 Frequenzdekaden beträgt.

4. Verfahren nach Anspruch 1, dadurch gekennzeichnet, daß man die Polymerisation bei Temperaturen von 40 bis 160°C durchführt.

5. Verfahren nach Anspruch 1, dadurch gekennzeichnet, daß man die Polymerisation in Gegenwart eines inerten Lösungsmittels durchführt.

6. Verfahren nach Anspruch 1, dadurch gekennzeichnet, daß man die Polymerisation in Gegenwart von Alkalimetallverbindungen durchführt.
